**Europäisches Patentamt**

**European Patent Office**

**Office européen des brevets**

(19)

(11) Veröffentlichungsnummer: **0 195 121**

**A1**

(12) **EUROPÄISCHE PATENTANMELDUNG**

(21) Anmeldenummer: **85114848.6**

(22) Anmeldetag: **22.11.85**

(51) Int. Cl.⁴: **F 16 L 58/02**
**F 16 L 58/10, F 16 L 9/14**
**F 02 M 35/10, F 02 B 77/02**

(30) Priorität: **26.01.85 DE 3502603**

(43) Veröffentlichungstag der Anmeldung:
**24.09.86 Patentblatt 86/39**

(84) Benannte Vertragsstaaten:
**DE FR GB IT**

(71) Anmelder: **Dr.Ing.h.c. F. Porsche Aktiengesellschaft**
**Porschestrasse 42**
**D-7000 Stuttgart 40(DE)**

(72) Erfinder: **Ziegler, Klaus**
**Sperberweg 13**
**D-7251 Weissach(DE)**

(54) **Verfahren zum Auskleiden von Rohren und Kanälen.**

(57) Um ein Rohr (4), insebesondere ein Saugrohr, mit einer maßhaltigen und glatten Auskleidung zu versehen, wird an seine Innenwand (3) ein mit einem flüssigen, aus-härtbaren Harz getränkter Gewebeschlauch (1) aus Kohlefasern angelegt. Ein Gummischlauch (2), der auf der einen Seite (5) zusammengebunden ist und auf der anderen Seite (8) einen Druckluftanschluß (10) hat, wird aufgepumpt und drückt den Gewebeschlauch (1) so lange an die Saugrohrinnenwand (3) an, bis die Auskleidung ausgehärtet ist. Danach wird der Gummischlauch (2) aus dem Saugrohr (4) entfernt.

EP 0 195 121 A1

Verfahren zum Auskleiden
von Kanälen und Rohren

Die Erfindung betrifft ein Verfahren zum Auskleiden von
Kanälen und Rohren, insbesondere von Saugrohren einer Kolbenbrennkraftmaschine.

Der offene Querschnitt und die Oberflächenbeschaffenheit eines
Saugrohres einer Kolbenbrennkraftmaschine beeinflussen in hohem
Maße ihre Füllung und damit ihr Drehmoment und ihre Leistung.
Bei der Neuentwicklung einer Brennkraftmaschine ist es nötig,
den optimalen Saugrohrquerschnitt versuchsmäßig zu ermitteln.
Es wäre nun viel zu zeit- und kostenaufwendig, für jeden Versuch neue Saugrohre zu gießen. Deshalb versieht man die Saugrohre mit einer Auskleidung, wobei man ihre Wandstärke und damit
den Saugrohrquerschnitt so lange variiert, bis eine zufriedenstellende Leistungsabstimmung der Brennkraftmaschine erreicht
ist.

Aus DE-OS 26 55 154 ist es bekannt, die Saugrohrleitung im Bereich der Einlaßkanäle mit einer Kunststoffauskleidung, z. B.
aus Polyurethan, zu versehen. Es wird dort vorgeschlagen, die
Beschichtung durch Streichen, Spritzen, Sintern oder Gießen
aufzubringen.

In DE-PS 828 462 ist vorgesehen, ein metallisches Rohr mit
einem Kunststoffrohr auszukleiden, indem man das Kunststoffrohr lose einsteckt und darauf durch ein heißes Gas unter Druck
setzt, bis es sich durch Erweichung und Ausdehnung an das Metallrohr anschließt.

Beide Auskleidungsverfahren haben den Nachteil, daß, bedingt
durch das Beschichtungsverfahren die Rohrwand wellig wird
und der offene Querschnitt nur recht ungenau bemessen werden
kann.

Für einige Anwendungsfälle, beispielsweise für Saugrohre von
Brennkraftmaschinen, stellt sich jedoch die Aufgabe, eine Auskleidung so zu fertigen, daß der offene Querschnitt ganz exakt
und gleichbleibend über die gesamte Rohrlänge festgelegt werden
kann.

Eine Lösung dieser Aufgabe gelingt mit den im Kennzeichen des
Anspruchs 1 angegebenen Verfahrensschritten. Ein sehr grobmaschiger Gewebeschlauch, der aus einem Geflecht von Kohlefasern
oder Glasfasern besteht, wird mit flüssigem Harz überzogen, das
sich bei Anlegen des Gewebeschlauchs an die Innenwand des
Rohres in dessen Poren und Vertiefungen eindringt. Um diesen
Gewebeschlauch während des Aushärtens zu glätten und an die
Rohrinnenwand anzupressen, wird ein an einer Seite geschlossener elastischer Schlauch, beispielsweise ein Fahrradschlauch,
durch das Saugrohr durchgesteckt und von der anderen Seite her
mit Druckluft aufgepumpt. Der elastische Schlauch bleibt unter
Druck, bis nach ca. 6 Stunden das Harz ausgehärtet ist. Um den
elastischen Schlauch anschließend leicht von dem ausgehärteten
Gewebeschlauch ablösen zu können, ist es vorteilhaft, ihn vor
dem Einschieben und Aufpumpen mit Talkum zu bestreichen. Die
so gefertigte Auskleidung ist innen sehr glatt und hat eine
über die ganze Länge gleichbleibende Wandstärke. Der offene
Querschnitt ist durch das fertigungstechnisch exakt einhaltbare
Innenmaß des Gewebeschlauches festgelegt. Alle Unebenheiten des
Metallrohres werden durch das Harz ausgefüllt, dem der
Gewebeschlauch eine erhöhte Festigkeit verleiht.

Auf die gleiche Weise lassen sich auf die erste Schicht weitere
Schichten auftragen, bis das Saugrohr den erforderlichen Innendurchmesser hat. Die Schichtdicke beträgt jeweils etwa 0,25 mm. Auch Saugrohre mit vom Kreisquerschnitt abweichenden Querschnitten können auf diese Weise beschichtet werden, da sich sowohl der Gewebeschlauch als auch der elastische Schlauch der jeweiligen Querschnittsform leicht anpassen kann.

Mit Vorteil findet dieses Verfahren im Versuch bei der Entwicklung neuer Brennkraftmaschinen Anwendung. Es kann aber auch benutzt werden, wenn aus einer vorhandenen Serienfertigung eine Kleinserie mit abgeänderten Kenndaten abgeleitet werden soll, wobei die Saugrohrquerschnitte angepaßt werden müssen. Hier kann ein Kostenvorteil erzielt werden, indem vorhandene Gußsaugrohre, die wegen der Großserienfertigung preisgünstig herstellbar sind, mit dem erfindungsgemäßen Beschichtungsverfahren auf das erforderliche Maß eingeengt werden.

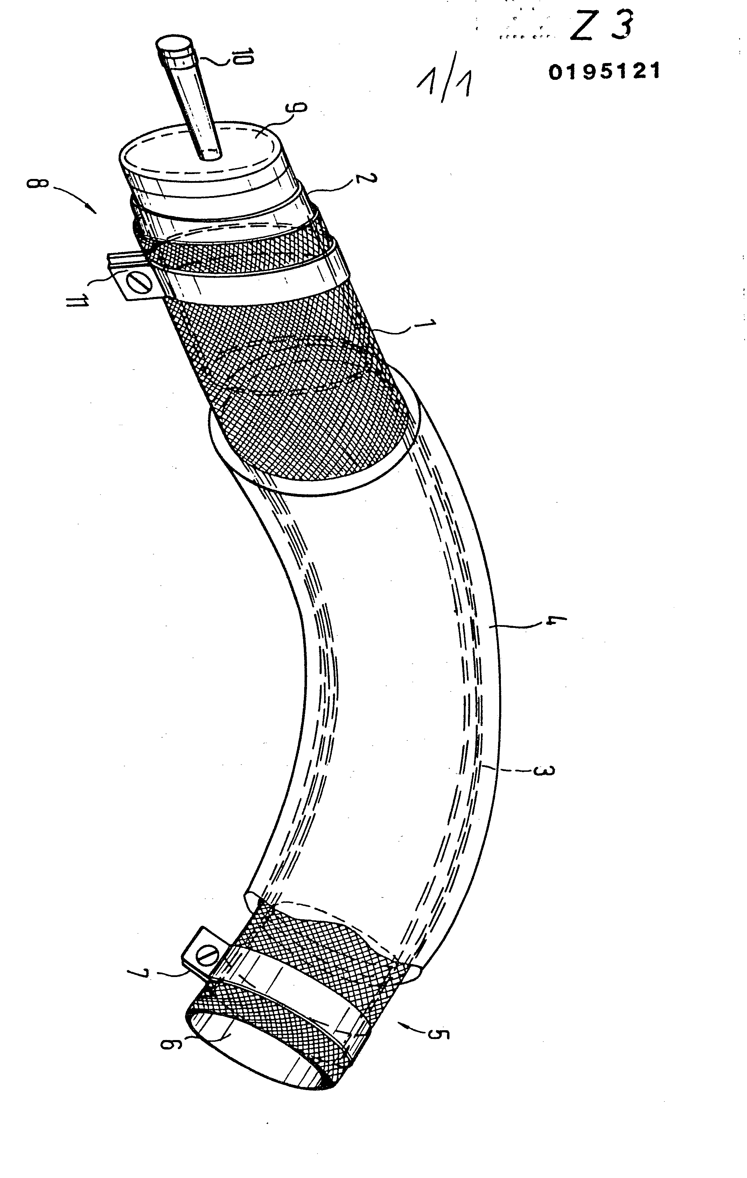

Anhand der Zeichnung wird das erfindungsgemäße Auskleidungsverfahren nachfolgend näher erläutert.

Ein grobmaschiger Gewebeschlauch 1 aus Kohlefasern, der eine Wandstärke von ca. 2,5 mm hat, wird über einen Gummischlauch 2 gezogen und mit ihm zusammen mit flüssigem Epoxidharz getränkt und an die Rohrinnenwand 3 eines aus Leichtmetall gegossenen Saugrohres 4 angelegt. Der Gummischlauch 2 wird an der einen Seite 5 nach Einführen eines Stopfens 6 mit einer Rohrschelle 7 abgeklemmt. An der anderen Seite 8 wird ein Stopfen 9 mit Druckluftanschluß 10 durch eine Rohrschelle 11 eingeklemmt. Danach wird der Gummischlauch 2 mit Druckluft auf einen Druck von ca. 4 bar aufgepumpt. Er dehnt sich dabei radial aus und drückt den Gewebeschlauch 1 gleichmäßig auf der ganzen Länge an die Innenwand des Saugrohres 4 an. Nach ca. 4 - 6 Stunden ist das Epoxidharz ausreichend soweit ausgehärtet, daß die Druckluft aus dem Gummischlauch 2 genommen und er vorsichtig von dem Gewebeschlauch 1 abgelöst werden kann. Auf die gleiche Weise können mehrere Schichten übereinander gelegt werden, bis das Saugrohr 4 auf den erforderlichen Innenquerschnitt reduziert ist.

0195121

Z 3

Patentansprüche

1. Verfahren zum Auskleiden von Kanälen und Rohren, insbesondere von Saugrohren einer Kolbenbrennkraftmaschine, dadurch gekennzeichnet, daß an die Rohrinnenwand ein mit einem aushärtbaren, flüssigen Stoff getränkter, grobmaschiger Gewebeschlauch (1) angelegt wird, und daß durch den Gewebeschlauch (1) ein an einer Seite (5) verschlossener elastischer Schlauch (2) durchgeschoben wird, der von der offenen Seite (8) her so stark mit Druckluft beaufschlagt wird, daß er den Gewebeschlauch (1) an die Rohrinnenwand (3) andrückt und daß der elastische Schlauch (2) nach dem Aushärten der Auskleidung aus dem Rohr (4) entfernt wird.

2. Verfahren nach Anspruch 1, dadurch gekennzeichnet, daß auf die erste Auskleidungsschicht eine zweite oder mehrere, weitere Schichten aufgebracht werden.

3. Verfahren nach Anspruch 1, dadurch gekennzeichnet, daß ein Gewebeschlauch (1) aus Kohle- oder Glasfasern verwendet wird.

4. Verfahren nach Anspruch 1, dadurch gekennzeichnet, daß als elastischer Schlauch (2) ein zylindrischer Gummischlauch verwendet wird, der an der einen Seite (5) abgebunden und von der anderen Seite (8) mit Druckluft von ca. 4 bar beaufschlagt wird.

5. Verfahren nach Anspruch 1, dadurch gekennzeichnet, daß der Gewebeschlauch (1) mit flüssigem Gießharz getränkt und mit ihm rundum beschichtet wird.

**Europäisches Patentamt**

## EUROPÄISCHER RECHERCHENBERICHT

| | EINSCHLÄGIGE DOKUMENTE | | EP 85114848.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | <u>DE - A1 - 2 362 784</u> (INSITUFORM)<br>* Gesamt *<br>-- | 1,2,3,<br>4,5 | F 16 L 58/02<br><br>F 16 L 58/10<br><br>F 16 L 9/14 |
| A | <u>FR - A1 - 2 480 901</u> (SOCIETE CO-OPETANCHE)<br>* Gesamt *<br>---- | 1 | F 02 M 35/10<br><br>F 02 B 77/02 |

| RECHERCHIERTE SACHGEBIETE (Int. Cl.4) |
|---|
| F 16 L 58/00<br><br>F 16 L 9/00<br><br>F 02 M 35/00<br><br>F 02 B 77/00 |

Der vorliegende Recherchenbericht wurde für alle Patentansprüche erstellt.

| Recherchenort | Abschlußdatum der Recherche | Prüfer |
|---|---|---|
| WIEN | 23-05-1986 | SCHUGANICH |